# FASCICULE DE BREVET EUROPEEN

(11) **EP 3 119 580 B1**
(45) Date de publication et mention de la délivrance du brevet: **05.01.2022**
(21) Numéro de dépôt: 15711199.8
(22) Date de dépôt: 20.03.2015
(51) Int. Cl.: B29C 49/02, B29B 11/02, B29B 11/04, B29C 49/42, B29C 49/78, B29C 65/08, B29C 65/78, B29C 65/00, B29C 53/54, B29K 105/00, B29C 49/08, B29C 49/60, B29C 49/48, B29C 49/00

(54) **MACHINE DE SOUFFLAGE D'ARTICLES TELS QUE DES RECIPIENTS**
VORRICHTUNG ZUM BLASFORMEN VON GEGENSTÄNDEN WIE BEHÄLTERN
MACHINE FOR BLOW-MOULDING ARTICLES SUCH AS CONTAINERS

(30) Priorité: 21.03.2014 FR 1452407
(43) Date de publication de la demande: 25.01.2017
(73) Titulaire: SERAC GROUP, 72400 La Ferté-Bernard (FR)
(72) Inventeur: ELEFTHERIOU, Stylianos, F-78160 Marly-le-roi (FR)
(74) Mandataire: Lavialle, Bruno François Stéphane
(86) Numéro de dépôt international: PCT/EP2015/056022
(87) Numéro de publication internationale: WO 2015/140335

(56) Documents cités:
- WO-A1-94/19240
- FR-A1- 2 851 227
- US-A1- 2011 303 673
- None

## Description

La présente invention concerne le domaine de l'emballage et plus particulièrement une machine de soufflage d'articles tels que des récipients.

Il est connu des documents FR-A-2851227 et WO-A-2010/007004 un procédé et une machine de soufflage de récipients qui sont formés à partir d'une bande de matériau thermoformable. Le procédé a comme principe de conformer la bande en un tube qui est chauffé puis introduit dans un moule. De l'air injecté dans le tube permet de déformer le tube pour en appliquer la paroi contre la surface interne de l'empreinte du moule. Ce procédé est moins lourd à mettre en œuvre qu'un procédé d'extrusion soufflage et permet d'obtenir des formes plus variées qu'un procédé de thermoformage classique. En outre, l'utilisation d'un matériau en bande et l'étirement limité du matériau autorisent l'emploi de matériau multicouche.

La machine décrite dans ces documents comprend un bâti sur lequel sont montés, successivement le long d'une trajectoire rectiligne de la bande dans la machine, une canne de soufflage raccordée à un organe de distribution d'air et coaxiale à une direction longitudinale de la bande, un conformateur agencé autour de la canne de soufflage pour ramener des bords longitudinaux de la bande au voisinage l'un de l'autre de manière à conformer la bande en un tube autour de la canne de soufflage, un organe de soudage des bords adjacents de la bande conformée en tube, au moins un organe de chauffage de la bande, un moule comportant deux parties mobiles relativement l'une à l'autre, et un dispositif d'entraînement de la bande le long de sa direction longitudinale. L'organe de soufflage, l'organe de soudage, l'organe de chauffage, le moule et le dispositif d'entraînement sont reliés à une unité de pilotage qui est agencée pour commander ceux-ci de manière à mettre en œuvre le procédé de soufflage.

On s'est aperçu que les performances de la machine sont très dépendantes de la régularité de l'avancement du matériau dans la machine, que ce soit en termes de productivité ou en termes de qualité des récipients obtenus en particulier lorsque la bande de matériau est imprimée.

Or, dans cette machine, le matériau se présente sous la forme de tronçons alternativement souples et rigides, à savoir :
- un tronçon relativement souple lorsque le matériau est sous forme de bande,
- un tronçon relativement rigide lorsque la bande est sous la forme d'un tube en amont de l'organe de chauffage,
- à nouveau un tronçon relativement souple lorsque la bande est sous la forme d'un tube en aval de l'organe de chauffage,
- à nouveau un tronçon relativement rigide après le moulage.

Cette alternance complique l'entraînement du matériau en particulier lorsqu'est recherchée une vitesse relativement élevée d'avancement du matériau dans la machine ou que la bande est imprimée. En effet, il faut éviter de provoquer un étirement excessif des tronçons souples ou la formation de plis dans ceux-ci.

Un but de l'invention est de fournir un moyen permettant d'augmenter les performances en productivité et/ou en qualité, de telles machines.

A cet effet, on propose, selon l'invention, une machine de soufflage d'articles à partir d'une bande de matériau, comprenant un bâti sur lequel sont montés, successivement le long d'une trajectoire rectiligne de la bande dans la machine, une canne de guidage coaxiale à une direction longitudinale de la bande, un conformateur agencé autour de la canne de guidage pour ramener des bords longitudinaux de la bande au voisinage l'un de l'autre de manière à conformer la bande en un tube autour de la canne de guidage, un organe de soudage des bords adjacents de la bande conformée en tube, au moins un organe de chauffage de la bande, et un moule comportant deux parties mobiles relativement l'une à l'autre. La machine comporte en outre un dispositif d'entraînement de la bande le long de sa direction longitudinale et un organe de soufflage raccordé à un organe de distribution d'air pour déformer le tube dans le moule et appliquer le tube contre une empreinte du moule. L'organe de soufflage, l'organe de soudage, l'organe de chauffage, le moule et le dispositif d'entraînement sont reliés à une unité de pilotage pour commander ceux-ci. Le dispositif d'entraînement comprend au moins un organe de maintien longitudinal de la bande et deux châssis montés sur le bâti et reliés chacun à un actionneur de déplacement pour être déplaçables le long de la trajectoire de la bande chacun entre une position amont et une position aval par référence à un sens de déplacement de la bande dans la machine et la canne, l'organe de maintien et le moule sont respectivement montés sur l'un du bâti et des châssis et l'unité de pilotage est reliée aux actionneurs de déplacement pour commander ceux-ci de manière à engendrer une séquence de déplacement de la canne de guidage et du moule par rapport à l'organe de maintien et d'ouverture et de fermeture du moule de manière à faire avancer la bande le long de la trajectoire rectiligne.

Ainsi, la bande conformée en tube est saisie en aval de l'organe de chauffage par le moule et la canne de guidage est déplacée avec la bande de matériau notamment en amont de l'organe de chauffage, pour permettre un déplacement de la bande dans la machine le long de la trajectoire définie. Ceci permet de limiter le risque de déformation de la bande conformée en tube lors de son entraînement le long de la trajectoire et améliore donc la précision de son déplacement.

Selon un mode de réalisation particulier de l'invention, la canne de guidage est solidaire du premier châssis, l'organe de maintien est solidaire du bâti et le moule est solidaire du deuxième châssis, l'unité de pilotage étant agencée de telle manière que :
- le premier châssis et le deuxième châssis sont amenés simultanément de leurs positions amont vers leurs positions aval après la fermeture du moule ;
- le premier châssis est ramené vers sa position amont avant l'ouverture du moule ;
- le deuxième châssis est ramené vers sa position amont après l'ouverture du moule.

De préférence alors, l'organe conformateur est monté sur le premier châssis.

Avantageusement, la machine comporte au moins un presseur monté sur le bâti pour être mobile transversalement à la canne de guidage entre une position de retenue de la bande conformée en tube et une position de libération de la bande conformée en tube.

Le presseur n'est plus en contact avec la bande conformée en tube lorsque le premier châssis est ramené en position aval limitant là encore le risque d'une détérioration de la bande.

De préférence, la canne de guidage incorpore longitudinalement un canal aller et retour ayant une entrée et une sortie reliées à un dispositif de régulation thermique comportant un circuit de fluide caloporteur.

Il est ainsi possible de réguler la température de la canne de guidage et donc de la bande conformée en tube de telle manière que celle-ci soit optimale pour le soufflage.

Selon un mode de réalisation particulier, la canne de guidage comporte un conduit central relié à l'organe de soufflage et avantageusement alors le canal aller et retour comporte deux conduits annulaires coaxiaux au conduit central.

La canne de guidage reste relativement simple à fabriquer.

Selon une caractéristique particulière, la machine comprend au moins un élément d'étanchéité entre la bande conformée en tube et la canne de guidage à l'entrée du moule et, de préférence, l'élément d'étanchéité est un diaphragme.

L'élément d'étanchéité peut alors enserrer la bande conformée en tube au niveau du moule pour assurer l'étanchéité. L'utilisation d'un diaphragme permet un serrage circonférentiel d'une portion annulaire de la bande conformée en tube. Un tel serrage circonférentiel, s'il laisse des marques sur la portion annulaire serrée, ne crée pas de pli susceptible d'altérer l'esthétique du récipient ou de gêner les opérations ultérieures de traitement de l'article, comme une opération de bouchage lorsque l'article est un récipient.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique en perspective d'une machine selon un premier mode de réalisation de l'invention,

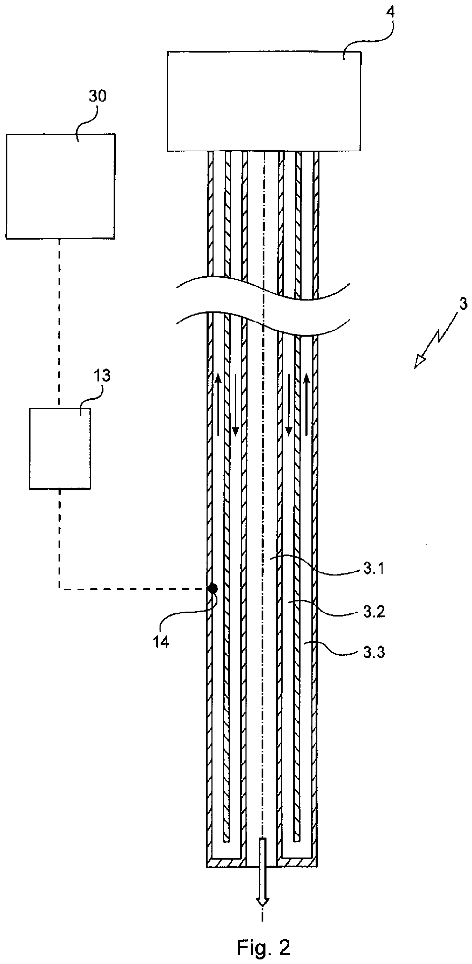

- la figure 2 est une vue en coupe longitudinale d'une canne de guidage de cette machine,

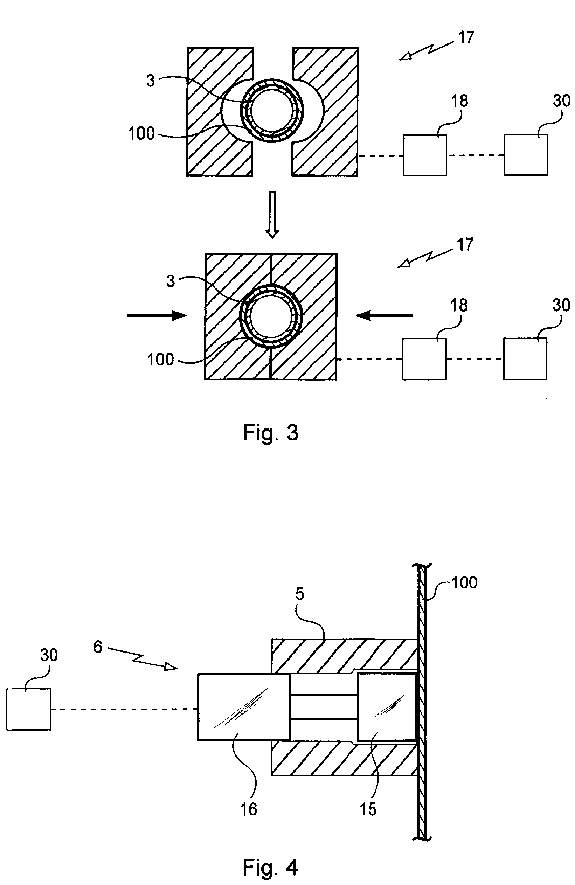

- la figure 3 est une vue schématique en coupe selon la ligne III-III de la figure 1, du presseur dans ses deux positions,
- la figure 4 est une vue schématique en coupe selon la ligne IV-IV de la figure 1 de l'unité de soudage de la machine,

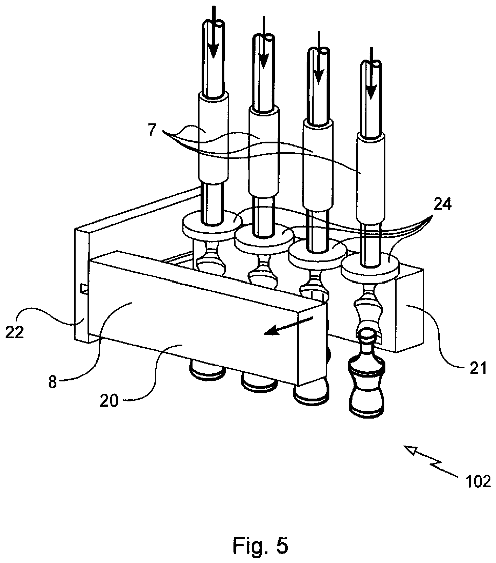

- la figure 5 est une vue en perspective du moule en position ouverte,
- les figures 6 à 8 sont des vues schématiques en plan montrant les différentes positions des châssis lors du fonctionnement de la machine,

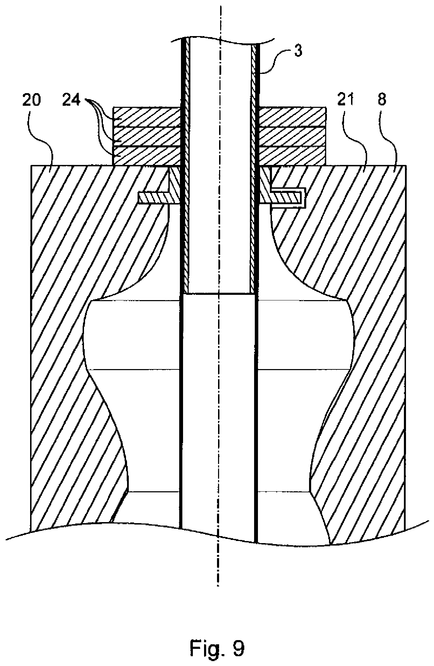

- la figure 9 est une vue partielle en coupe du moule en position fermée,
- la figure 10 est une vue partielle en perspective de la partie supérieure de la machine,
- la figure 11 est une vue analogue à la figure 1 d'une machine selon une variante du premier mode de réalisation,
- la figure 12 est une vue en coupe axiale d'un moule d'une machine selon un deuxième mode de réalisation de l'invention,
- la figure 13 est une vue analogue à la figure 1 d'une machine selon un troisième mode de réalisation de l'invention.

En référence aux figures, la machine selon l'invention est ici décrite en application à la fabrication de récipients. La machine ici décrite est plus particulièrement agencée pour la mise en œuvre du procédé décrit dans les documents FR-A-2851227 et WO-A-2010/007004.

Dans ce procédé, les récipients sont obtenus par soufflage à partir d'une bande de matériau thermoformable.

En référence aux figures, la machine selon l'invention comprend un bâti, généralement désigné en 1, qui a une forme sensiblement parallélépipédique s'étendant selon une direction sensiblement verticale. Dans le bâti 1 est définie une trajectoire de la bande de matériau thermoformable 100 dans la machine depuis un rouleau 2 de dévidage d'une bande de grande largeur dans laquelle est longitudinalement découpée la bande 100 jusqu'à une sortie des récipients 102 hors de la machine. La machine comprend ici quatre ensembles de soufflage adjacent alimentés chacun par une bande 100 découpée dans la bande de grande largeur se dévidant depuis le rouleau 2.

Pour chaque ensemble de soufflage, sur le bâti 1, sont montés, successivement le long d'un tronçon rectiligne de la trajectoire de la bande 100 dans la machine :
- une canne de guidage 3 qui est raccordée à un organe de distribution d'air 4 pour former un organe de soufflage et qui est coaxiale à une direction longitudinale D de la bande 100,
- un conformateur 5 pour conformer la bande 100 en un tube autour de la canne de guidage 3,
- un organe de soudage 6 des bords adjacents de la bande 100 conformée en tube,
- au moins un organe de chauffage 7 de la bande 100, et
- un moule 8.

L'organe de distribution d'air 4 est ici un distributeur pilotable électriquement ayant un port relié à la canne de guidage et un port relié à un circuit pneumatique sous pression comportant une réserve d'air sous pression alimentée par un compresseur.

L'organe de chauffage 7 est fixe par rapport au bâti 1. L'organe de chauffage 7 est ici formé d'un tunnel dans lequel sont disposées des lampes infrarouges en regard desquelles circule la bande conformée en tube.

La canne de guidage 3, le conformateur 5 et l'organe de soudage 6 sont montés sur un premier châssis 11 monté sur le bâti et relié à un actionneur 12 de déplacement pour être déplaçable le long de la trajectoire de la bande 100 entre une position amont et une position aval par référence à un sens de déplacement de la bande 100 dans la machine.

La canne de guidage 3 a une extrémité fixée au premier châssis 11 et une extrémité opposée libre. La canne de guidage 3 comporte un conduit central 3.1 relié à l'organe de distribution d'air 4 et un canal aller et retour comportant deux conduits annulaires 3.2, 3.3 coaxiaux au conduit central 3.1. Les conduits 3.1, 3.2, 3.3 sont coaxiaux à la canne de guidage 3. Les conduits annulaires 3.2, 3.3 sont reliés l'un à l'autre au niveau de l'extrémité libre de la canne de guidage 3, le conduit annulaire 3.2 est relié à une entrée d'un circuit de fluide caloporteur d'un dispositif de régulation thermique 13 et le conduit annulaire 3.3 est relié à une sortie du circuit de fluide caloporteur de sorte que les conduits annulaires 3.2, 3.3 forment un canal aller et retour. Le fluide caloporteur est une huile ou de l'air et la régulation thermique est effectuée de manière à maintenir la canne de guidage à une température adaptée pour le soufflage (notamment pour éviter qu'elle ne refroidisse entre l'organe de chauffage 7 et le moule 8) et/ou d'éviter un échauffement excessif de la surface de la canne de guidage 3 notamment dans le four (le fluide caloporteur est choisi en fonction de son aptitude à assurer l'une et/ou l'autre de ces fonctions). Le dispositif de régulation 13 comporte un organe de chauffage, ici une résistance chauffante, ou un échangeur de chaleur, permettant de maintenir le fluide caloporteur à la température appropriée au but recherché et une sonde de température 14, reliée au dispositif de régulation thermique 13, est solidaire de la canne de guidage 3.

L'organe de soudage 6 comprend ici une tête de soudage 15 solidaire d'un générateur à ultrasons 16 monté sur le premier châssis 11 pour être mobile transversalement à la trajectoire de la bande 100 entre une position active de soudage dans laquelle la tête de soudage 15 est appliquée contre les bords longitudinaux de la bande 100 qui ont été rapprochés l'un de l'autre par le conformateur 5 et une position inactive dans laquelle la tête de soudage 15 est décollée des bords longitudinaux. L'organe de soudage 6 est déplacé entre ses deux positions par un actionneur.

Le conformateur 5 est monté sur le premier châssis 11 et comprend des mâchoires qui sont mues par un actionneur entre des positions ouverte et fermée et qui ont une empreinte sensiblement en forme de demi-cylindre agencée autour de la canne de guidage 3 pour ramener des bords longitudinaux de la bande 100 au voisinage l'un de l'autre de manière à mettre la bande en forme de tube autour de la canne de guidage 3 et saisir la bande en forme de tube. L'empreinte peut avoir toute autre forme adaptée à la conformation de la bande en tube.

Pour des raisons de compacité et de simplicité, l'organe de soudage 6 est ici monté directement sur l'une des mâchoires du conformateur 5.

Un presseur 17 est monté sur le bâti 1 pour être mobile transversalement à la canne de guidage 3 entre une position de retenue de la bande en forme de tube et une position de libération de la bande en forme de tube. En position de retenue, le presseur 17 est appliqué contre la bande en forme de tube et, en position de libération, le presseur 17 est écarté de la bande en forme de tube. Le presseur 17 est agencé pour serrer circonférentiellement la bande conformée en tube sans serrer la canne de guidage 3 (la canne de guidage 3 comprend de préférence en regard du presseur 17 une restriction de section empêchant le serrage de la canne de guidage 3). Le presseur 17 est porté par un actionneur 18 monté sur le bâti 1 entre l'organe de soudage 6 et l'organe de chauffage 7.

Le moule 8 possède une empreinte agencé pour permettre le moulage d'un récipient. De préférence, le moule n'assure pas la séparation du récipient et du reste de la bande conformée en tube car ceci permet de stabiliser latéralement la bande conformée en tube (le poids des récipients exerce une traction vers le bas sur la bande conformée en tube) et ainsi mieux guider la bande conformée en tube. Cette séparation est effectuée plus tard. Le moule 8 est monté sur un deuxième châssis 22 qui est monté sur le bâti 1 et qui est relié à un actionneur 23 de déplacement pour être déplaçable le long de la trajectoire de la bande 100. Le deuxième châssis 22 est ainsi déplaçable entre une position amont et une position aval par référence au sens de déplacement de la bande dans la machine. La distance entre les positions amont et aval du deuxième châssis 22 est égale à la distance entre les positions amont et aval du premier châssis 11. Le moule 8 comporte deux parties 20, 21 mobiles relativement l'une à l'autre entre une position fermée permettant le moulage des récipients et une position ouverte permettant l'évacuation du récipient formé. Le moule 8 est pourvu de diaphragmes 24 superposés pour former un élément d'étanchéité entre la bande conformée en tube et le moule 8. Chaque diaphragme 24 comprend, de façon connue en elle-même, des lames assemblées sur une bague support pour délimiter un orifice central de passage de la canne de guidage 3 supportant la bande conformée en tube. Les lames sont mobiles les unes par rapport aux autres entre une position de fermeture dans laquelle l'orifice central a un diamètre légèrement inférieur au diamètre extérieur de la bande conformée en tube et une position d'ouverture dans laquelle l'orifice central a un diamètre supérieur au diamètre extérieur de la bande conformée en tube. Les diaphragmes 24 sont décalés angulairement les uns par rapport aux autres autour de la canne de guidage 3 pour améliorer l'étanchéité procurée par l'ensemble des diaphragmes 24. Les diaphragmes 24 sont solidaires d'un support annulaire fixé au moule 8. Le support annulaire comprend par exemple une collerette inférieure reçue de manière amovible dans une gorge ménagée dans les parties de moule.

L'organe de distribution d'air 4, l'organe de soudage 6, l'organe de chauffage 7, le moule 8, le dispositif de régulation 13 et les actionneurs sont reliés à une unité de pilotage 30 agencée pour commander ceux-ci.

L'unité de pilotage 30 est reliée aux actionneurs de déplacement des châssis 11, 22 pour commander ceux-ci de telle manière que :
- le premier châssis 11 et le deuxième châssis 22 soient amenés simultanément de leurs positions amont vers leurs positions aval après la fermeture du moule 8 ;
- le premier châssis 11 soit ramené vers sa position amont après l'ouverture des diaphragmes 24 et avant l'ouverture du moule 8 ;
- le deuxième châssis soit ramené vers sa position amont après l'ouverture du moule 8.

L'actionneur 18 est relié à l'unité de pilotage 30 pour que le presseur 17 soit en position de libération lorsque le premier châssis 11 est amené de sa position amont vers sa position aval et dans sa position d'application lorsque le premier châssis 11 est ramené de sa position aval vers sa position amont.

L'organe de soudage 6 et l'actionneur de l'organe de soudage 6 sont reliés à l'unité de pilotage 30 pour que le soudage intervienne lorsque le premier châssis 11 est amené de sa position amont vers sa position aval. L'actionneur est ainsi piloté pour que la tête de soudage 15 soit amenée en position active lorsque le premier châssis 11 est dans sa position amont et est maintenu en position active pendant tout ou partie du temps du déplacement du premier châssis 11 vers sa position aval. L'actionneur est piloté pour amener la tête de soudage 15 dans sa position inactive avant que le premier châssis 11 soit déplacé de sa position aval vers sa position amont.

Les parties de moule 8 et les diaphragmes 24 sont amenés dans leur position de fermeture lorsque le deuxième châssis 22 est dans sa position amont et sont maintenus dans leur position de fermeture jusqu'à ce que le deuxième châssis 22 soit dans sa position aval. Les parties de moule 8 et les diaphragmes 24 sont amenés dans leur position d'ouverture avant que le deuxième châssis 22 ne soit déplacé vers sa position amont.

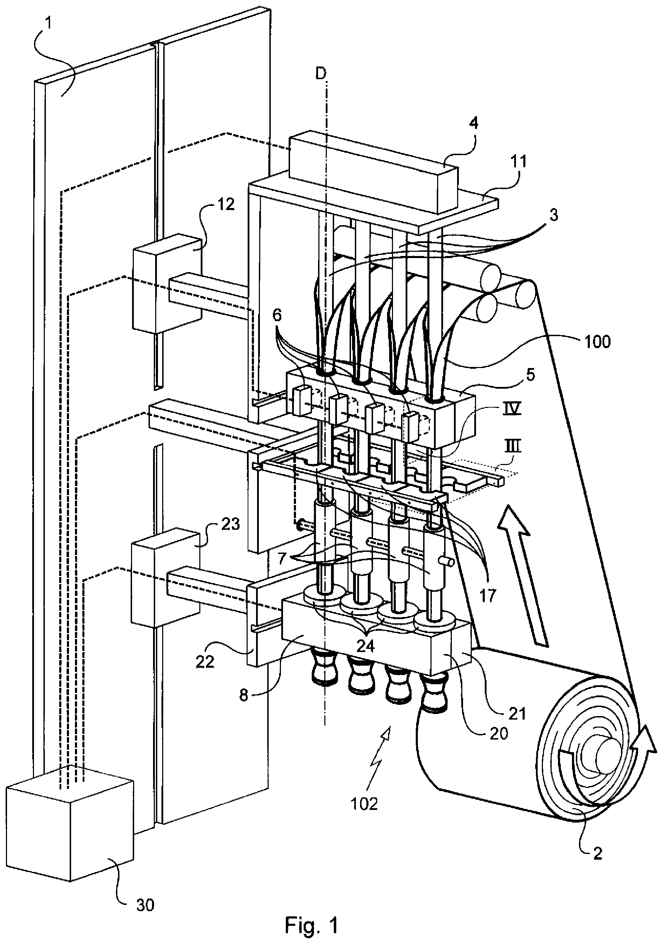

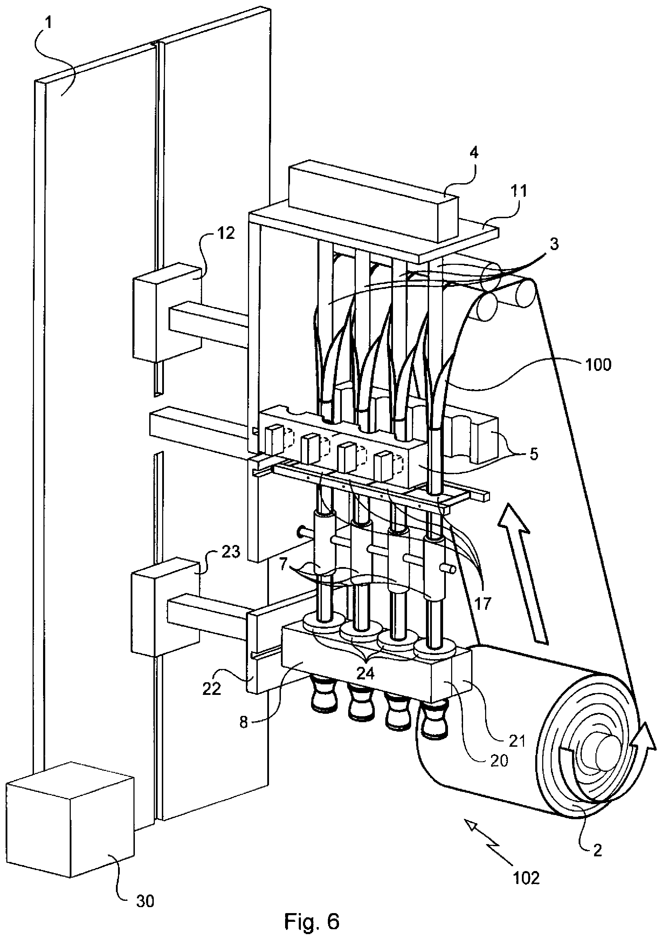

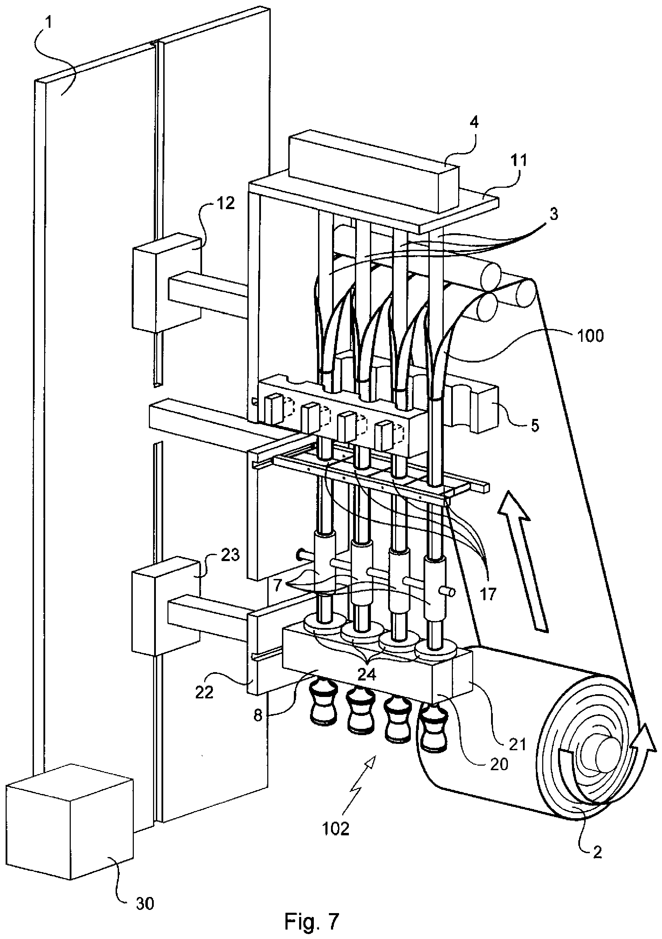

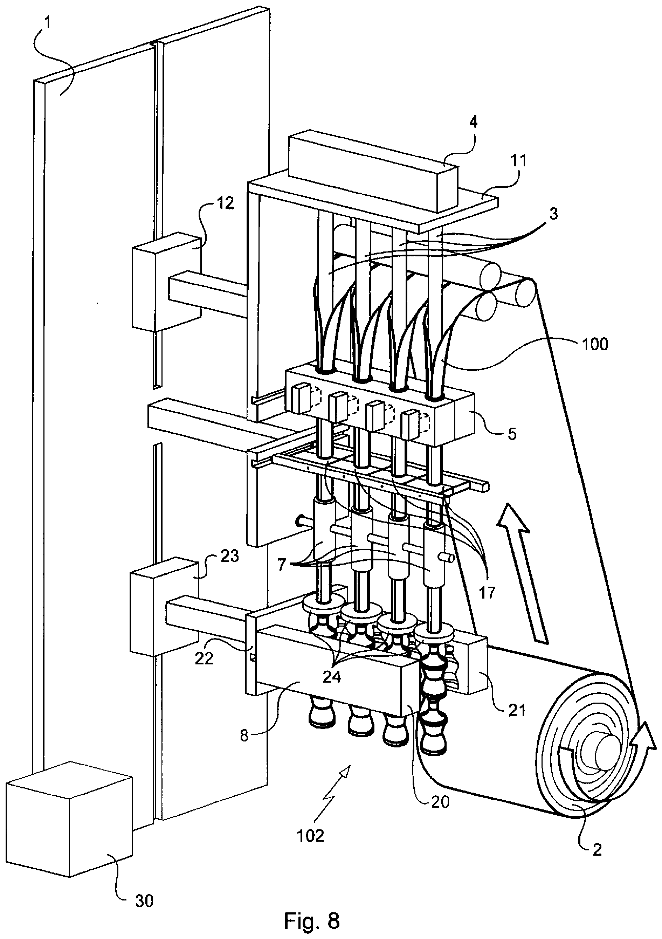

Sommairement, le cycle de fonctionnement de la machine se déroule comme suit :
- les châssis 11 et 22 sont en position haute, le conformateur 5 a été fermé pour débuter le soudage, le presseur 17 est en position de libération et le moule 8 est fermé (figure 1) ;
- le soudage et le soufflage débutent lorsque les châssis 11 et 22 commencent à être déplacés vers leurs positions aval ;
- le soudage et le soufflage s'arrêtent lorsque les châssis 11 et 22 sont en position aval (figure 6), le conformateur 5 est alors ouvert et le presseur 17 est amené vers sa position de retenue. Simultanément, le récipient est mis à l'atmosphère ;
- le premier châssis 11 est alors amené vers sa position amont après ouverture des diaphragmes 24 (figure 7) ;
- une fois le premier châssis 11 arrivé en position amont (figure 8), le moule 8 est ouvert et le conformateur 5 est fermé de sorte que le soudage peut débuter dès cet instant si nécessaire ;
- le deuxième châssis 22 est alors remonté en position amont, le moule 8 est refermé de même que les diaphragmes 24, et le presseur 17 est ramené en position de libération pour mettre la machine en état pour débuter un nouveau cycle (situation de la figure 1).

Le chauffage de la bande conformée en tube est effectué lui en continu.

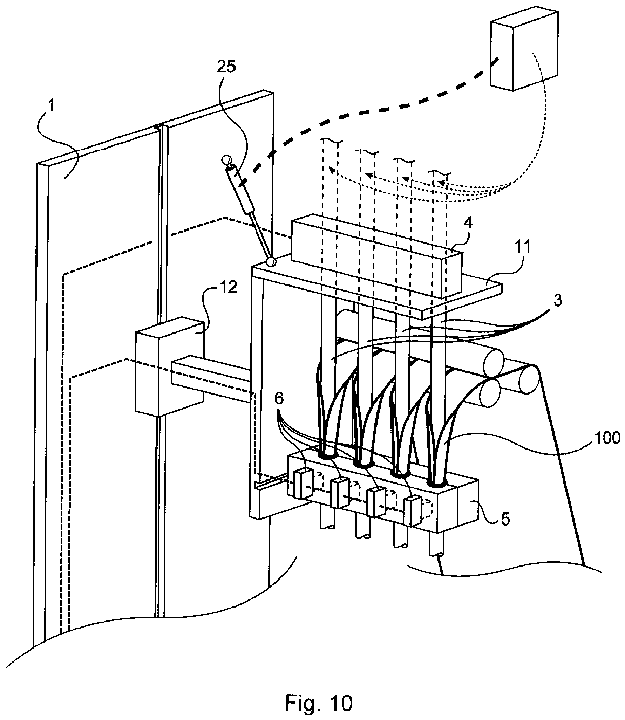

La machine comprend un moyen de compensation d'un volume laissé libre dans la bande conformée en tube lorsque le premier châssis 11, et donc la canne de guidage 3, est amené de sa position aval à sa position amont. Lors de ce déplacement, la canne de guidage 3 libère un certain volume dans la bande conformée en tube. Le moyen de compensation permet ici de remplir d'air ce volume au fur et à mesure qu'il est libéré par la canne de guidage 3. A cet effet, le moyen de compensation comprend un vérin 25 (visible sur la figure 10) ayant un corps articlé au bâti 1, une tige articulée au premier châssis 11 et une chambre arrière reliée à l'organe de distribution d'air 4 de telle manière que le déplacement relatif de la canne de guidage 3 et du presseur 17 provoque l'injection dans la bande conformée en tube d'un volume d'air sensiblement égal au volume laissé libre dans la bande conformée en tube lors du déplacement de la canne de guidage 3. On comprend que lorsque le premier châssis 11 remonte, il provoque la rétractation de la tige du vérin 25 qui chasse l'air de la chambre arrière du vérin 25, cet air étant réintroduit dans l'organe de distribution d'air 4 puis dans la bande conformée en tube via la canne de guidage 3. S'il y a un vérin de compensation par ensemble de soufflage, la section intérieure du corps du vérin 25 est choisie de telle manière que le produit de la section intérieure du vérin par la course de la tige entre les positions aval et amont du premier châssis 11 soit égal au volume laissé libre, dans la bande conformée en tube, par la canne de guidage lors du déplacement du premier châssis 11 de la position aval à la position amont. Comme le vérin 25 est ici commun aux quatre ensembles de soufflage, sa section intérieure est choisie de telle manière que le produit de la section intérieure du vérin 25 par la course de la tige entre les positions aval et amont du premier châssis 11 soit égal à quatre fois le volume laissé libre, dans la bande conformée en tube, par une des cannes de guidage 3 lors du déplacement du premier châssis 11 de la position aval à la position amont.

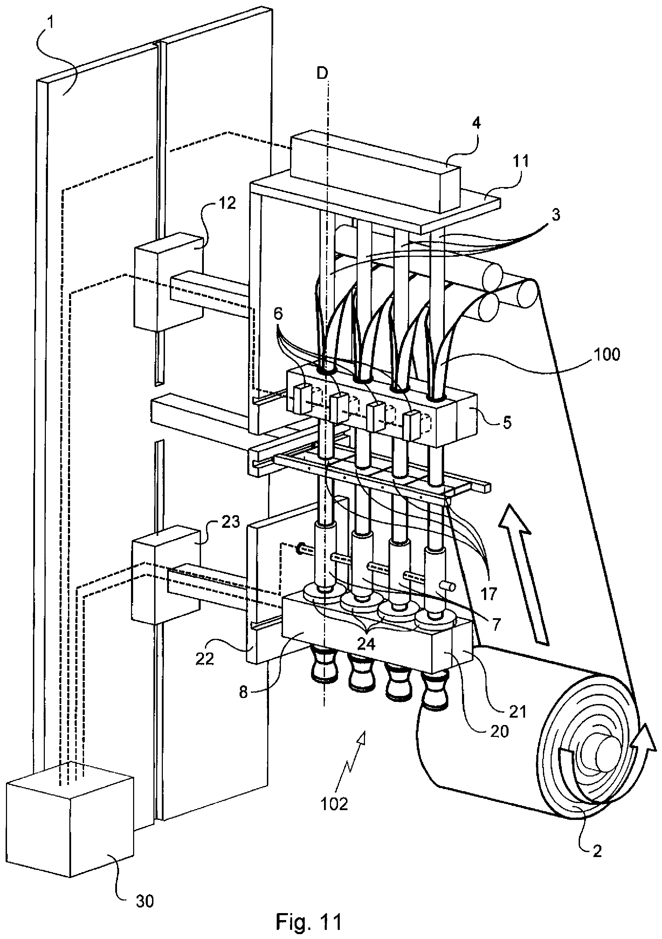

Dans la variante de la figure 11, l'organe de chauffage 7 n'est plus fixé au bâti 1 mais au deuxième châssis 22. Ceci permet de ramener l'organe de chauffage 7 au plus près du moule 8. En outre une partie du chauffage peut être réalisée sur un tronçon de la bande conformée en tube qui est libéré par la canne de guidage 3 lorsque le premier châssis 11 est en position amont et le deuxième châssis 22 est en position aval : le chauffage est alors plus efficace.

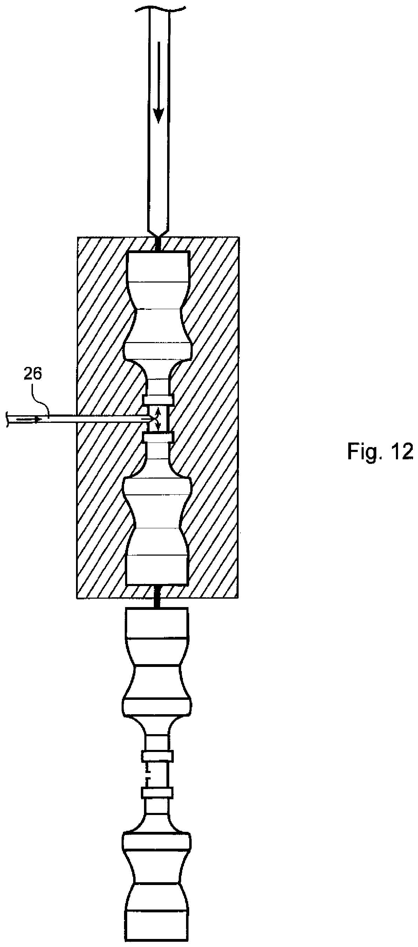

Dans le deuxième mode de réalisation représenté à la figure 12, la canne de guidage 3 n'est pas utilisée comme organe de soufflage.

Dans ce mode de réalisation, le moule 8 a une empreinte conformée pour permettre la réalisation de deux récipients tête-bêche réunis au niveau des goulots par une paroi de jonction tubulaire. Le moule comprend une aiguille 26 creuse ayant une extrémité raccordée à l'organe de distribution d'air 4 et une extrémité pointue en saillie dans une partie de moule pour percer, à la fermeture du moule, la bande conformée en tube au niveau de la paroi de jonction tubulaire. L'injection d'air se fait au niveau de la paroi de jonction tubulaire.

Comme précédemment, le moule 8 est agencé de telle manière que la paire de récipients formés ne soit pas séparée du reste de la bande conformée en tube. Cette séparation intervient ultérieurement.

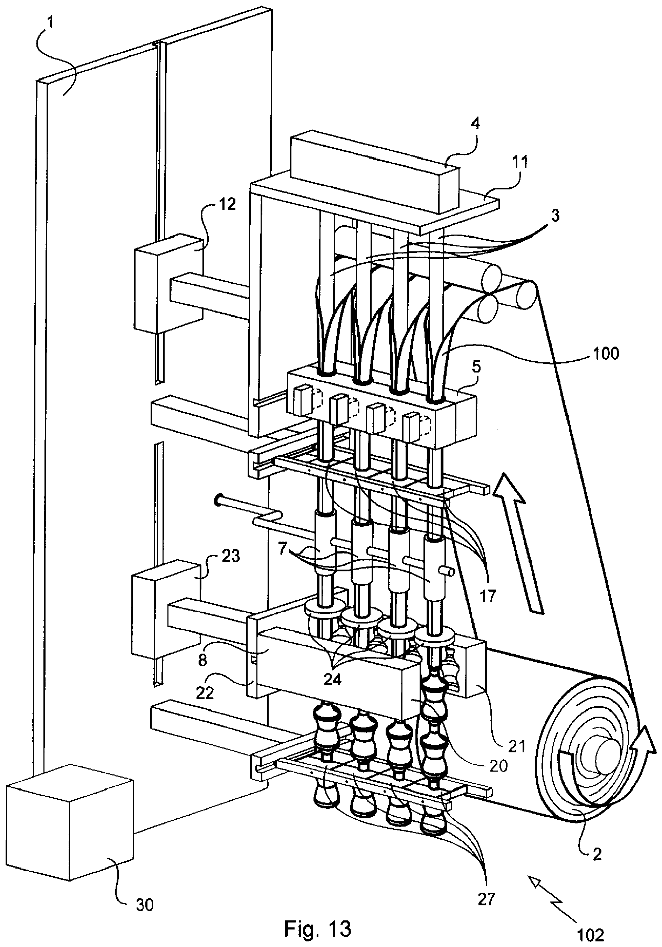

Le troisième mode de réalisation de la figure 13 est analogue au premier mode de réalisation sauf en ce qu'est rajoutée une pince 27 qui est montée sous le moule 8 pour se saisir des récipients formés et non détachés de la bande conformée en tube de manière à maintenir ainsi axialement la bande conformée en tube lorsque le moule 8 est ouvert et le premier bâti est remonté de sa position aval vers sa position amont.

Le presseur 17 est commandé pour maintenir la bande conformée en tube à l'ouverture du conformateur pendant le déplacement relatif de la bande conformée en tube et de la canne de guidage. La pince 27 est commandée pour maintenir le récipient pendant le déplacement relatif du moule.

Bien entendu, l'invention n'est pas limitée au mode de réalisation décrit mais englobe toutes les variantes entrant dans le champ de l'invention telle que définie par les revendications.

En particulier, la canne de guidage peut avoir une forme différente de celle décrite. Les conduits peuvent être formés de tubes accolés les uns aux autres et non coaxiaux. La canne de guidage peut être dépourvue de canal aller-retour lorsqu'il n'est pas nécessaire d'assurer une régulation thermique.

Le presseur 17 peut avoir la forme d'un galet monté pour pivoter par rapport au premier châssis. Ce galet peut être fixe en translation par rapport au premier châssis par exemple en équipant celui-ci d'une roue libre de sorte que le galet 17 soit fixe en rotation lorsque le premier châssis 11 est amené de sa position amont vers sa position aval pour entraîner avec lui la bande conformée en tube et soit pivotant lorsque le premier châssis 11 est ramené de sa position aval vers sa position amont pour rouler sur la bande conformée en tube.

En variante, le presseur 17 peut être monté sur un châssis mobile tandis que la canne de guidage et le conformateur sont solidaires du bâti.

Le bâti peut être agencé pour s'étendre horizontalement.

La rotation du rouleau de bande peut être libre ou provoquée par un actionneur piloté par l'unité de commande. La bande conformée en tube peut avoir la largeur du rouleau ou la bande dévidée du rouleau peut être coupée longitudinalement pour former plusieurs bandes. La machine comprend alors deux lignes en parallèle pour former des récipients dans chacune des bandes découpées dans la bande dévidée.

Lorsque la machine comporte plusieurs ensembles de soufflage, elle comporte un vérin de compensation par ensemble de soufflage et les composants mobiles de chaque ensemble de soufflage ont des amplitudes de déplacement qui peuvent être ajustées indépendamment des autres ensembles de soufflage pour synchroniser l'avancement des bandes découpées.

La machine peut comprendre un ou plusieurs organes de chauffage : par exemple un organe de préchauffage monté en amont de l'organe de chauffage.

Le remplissage des récipients peut être réalisé dans la machine de soufflage ou sur une machine de remplissage distincte.

L'invention est utilisable pour la fabrication d'articles creux en général et pas uniquement de récipients.

## Revendications

1. Machine de soufflage d'articles à partir d'une bande (100) de matériau, comprenant un bâti (1) sur lequel sont montés, successivement le long d'une trajectoire rectiligne de la bande (100) dans la machine, une canne de guidage (3) coaxiale à une direction longitudinale de la bande (100), un conformateur (5) agencé autour de la canne de guidage (3) pour ramener des bords longitudinaux de la bande (100) au voisinage l'un de l'autre de manière à conformer la bande (100) en un tube autour de la canne de guidage, un organe de soudage (6) des bords adjacents de la bande (100) conformée en tube, au moins un organe de chauffage (7) de la bande, un moule (8) comportant deux parties mobiles relativement l'une à l'autre ; la machine comportant un dispositif d'entraînement de la bande (100) le long de sa direction longitudinale et un organe de soufflage (26) raccordé à un organe de distribution d'air (4) pour déformer le tube dans le moule (8) et appliquer le tube contre une empreinte du moule ; l'organe de soufflage, l'organe de soudage, l'organe de chauffage, le moule et le dispositif d'entraînement étant reliés à une unité de pilotage (30) pour commander ceux-ci ; **caractérisée en ce que** le dispositif d'entraînement comprend au moins un organe de maintien longitudinal (17) de la bande (100) et deux châssis (11, 22) montés sur le bâti (1) et reliés chacun à un actionneur (12, 23) de déplacement pour être déplaçables le long de la trajectoire de la bande (100) chacun entre une position amont et une position aval par référence à un sens de déplacement de la bande (100) dans la machine et ce que la canne (3), l'organe de maintien (17) et le moule (8) sont respectivement montés sur l'un du bâti (1) et des châssis (11, 22) et l'unité de pilotage est reliée aux actionneurs de déplacement (12, 23) pour commander ceux-ci de manière à engendrer une séquence de déplacement de la canne de guidage (3) et du moule (8) par rapport à l'organe de maintien (17) et d'ouverture et de fermeture du moule (8) de manière à faire avancer la bande (100) le long de la trajectoire rectiligne.

2. Machine selon la revendication 1, dans laquelle la canne de guidage (3) est solidaire du premier châssis (11), l'organe de maintien (17) est solidaire du bâti (1) et le moule (8) est solidaire du deuxième châssis (22), l'unité de pilotage étant agencée de telle manière que :
- le premier châssis (11) et le deuxième châssis (22) soient amenés simultanément de leurs positions amont vers leurs positions aval après la fermeture du moule (8) ;
- le premier châssis (11) soit ramené vers sa position amont avant l'ouverture du moule (8) ;
- le deuxième châssis (22) soit ramené vers sa position amont après l'ouverture du moule (8).

3. Machine selon la revendication 2, dans laquelle le conformateur (5) est monté sur le premier châssis (11) .

4. Machine selon la revendication 2, l'organe de maintien comporte au moins un presseur (17) monté sur le bâti pour être mobile transversalement à la canne de guidage (3) entre une position d'application de la bande (100) conformée en tube contre la canne de guidage (3) et une position écartée de la bande (100) conformée en tube.

5. Machine selon la revendication 2, dans laquelle l'organe de chauffage (7) est monté sur le deuxième bâti (22) immédiatement au-dessus du moule (8).

6. Machine selon la revendication 1, dans laquelle la canne de guidage (3) incorpore longitudinalement un canal aller et retour (3.2, 3.3) ayant une entrée et une sortie reliées à un dispositif de régulation thermique (13) comportant un circuit de fluide caloporteur.

7. Machine selon la revendication 6, dans laquelle le fluide caloporteur est une huile.

8. Machine selon la revendication 6, dans laquelle le fluide caloporteur est de l'air.

9. Machine selon la revendication 6, dans laquelle une sonde de température (14), reliée au dispositif de régulation thermique (13), est solidaire de la canne de guidage (3).

10. Machine selon la revendication 1, dans laquelle la canne de guidage (3) est raccordée à l'organe de distribution d'air (4) pour former l'organe de soufflage.

11. Machine selon les revendications 6 et 10, dans laquelle la canne de guidage (3) comporte un conduit central (3.1) relié à l'organe de distribution d'air (4) et le canal aller et retour comporte deux conduits annulaires (3.2, 3.3) coaxiaux au conduit central (3.1).

12. Machine selon la revendication 10, comprenant un élément d'étanchéité entre la bande (100) conformée en tube et la canne de guidage (3) à l'entrée du moule (8).

13. Machine selon la revendication 12, dans lequel l'élément d'étanchéité est un diaphragme (24).

14. Machine selon la revendication 10, comprenant un moyen de compensation d'un volume laissé libre dans la bande (100) conformée en tube lors d'un déplacement de la canne de guidage (3) par rapport à la bande (100) conformée en tube.

15. Machine selon la revendication 14, dans laquelle le moyen de compensation comprend un vérin (25) ayant une extrémité reliée au bâti (1), une extrémité reliée au premier châssis (11) et une chambre reliée à l'organe de distribution d'air de telle manière que le déplacement relatif de la canne de guidage (3) et de l'organe de maintien (17) provoque l'injection dans le tube d'un volume d'air sensiblement égal au volume laissé libre dans la bande (100) conformée en tube lors du déplacement de la canne de guidage (3).

16. Machine selon la revendication 1, dans laquelle l'organe de soufflage comprend une aiguille creuse (26) ayant une extrémité raccordée à l'organe de distribution d'air (4) et une extrémité pointue en saillie dans une partie de moule (8) pour percer le tube à la fermeture du moule (8).

## Patentansprüche

1. Maschine zum Blasformen von Gegenständen aus einem Materialband (100), umfassend ein Gestell (1), an dem nacheinander entlang einer geradlinigen Bahn des Bandes (100) in der Maschine angebracht sind: ein Führungsrohr (3), das koaxial zu einer Längsrichtung des Bandes (100) ist, ein Formgeber (5), der um das Führungsrohr (3) herum angeordnet ist, um Längsränder des Bandes (100) einander nahe zu bringen, um so das Band (100) zu einem Rohr um das Führungsrohr herum zu formen, ein Schweißorgan (6) zum Verschweißen der angrenzenden Ränder des zu einem Rohr geformten Bandes (100), mindestens ein Heizorgan (7) zum Erwärmen des Bandes, eine Form (8), die zwei relativ zueinander bewegliche Teile umfasst; wobei die Maschine eine Antriebsvorrichtung zum Antrieb des Bandes (100) entlang seiner Längsrichtung und ein Blasformorgan (26) umfasst, das an ein Luftverteilungsorgan (4) angeschlossen ist, um das Rohr in der Form (8) zu verformen und das Rohr gegen eine Kavität der Form zu drücken; wobei das Blasformorgan, das Schweißorgan, das Heizorgan, die Form und die Antriebsvorrichtung mit einer Steuereinheit (30) zur Steuerung derselben verbunden sind; **dadurch gekennzeichnet, dass** die Antriebsvorrichtung mindestens ein Längshalteorgan (17) zum länglichen Halten des Bandes (100) und zwei Rahmen (11, 22) umfasst, die an dem Gestell (1) montiert und jeweils mit einem Bewegungsaktor (12, 23) verbunden sind, um entlang der Bahn des Bandes (100) jeweils zwischen einer stromaufwärtigen Position und einer stromabwärtigen Position in Bezug auf eine Bewegungsrichtung des Bandes (100) in der Maschine bewegbar zu sein, und dass das Rohr (3), das Halteorgan (17) und die Form (8) jeweils an einem Element ausgewählt aus dem Gestell (1) und den Rahmen (11, 22) montiert sind, und die Steuereinheit mit den Bewegungsaktoren (12, 23) verbunden ist, um diese so zu steuern, dass eine Abfolge eines Bewegens des Führungsrohrs (3) und der Form (8) in Bezug auf das Halteorgan (17) und eines Öffnens und Schließens der Form (8) derart erzeugt wird, dass das Band (100) entlang der geradlinigen Bahn vorgeschoben wird.

2. Maschine nach Anspruch 1, bei der das Führungsrohr (3) fest mit dem ersten Rahmen (11) verbunden ist, das Halteorgan (17) fest mit dem Gestell (1) verbunden ist und die Form (8) fest mit dem zweiten Rahmen (22) verbunden ist, wobei die Steuereinheit derart ausgebildet ist, dass:
- nach dem Schließen der Form (8) der erste Rahmen (11) und der zweite Rahmen (22) gleichzeitig von ihren stromaufwärtigen Positionen in ihre stromabwärtigen Positionen gebracht werden;
- vor dem Öffnen der Form (8) der erste Rahmen (11) wieder in seine stromaufwärtige Position gebracht wird;
- nach dem Öffnen der Form (8) der zweite Rahmen (22) wieder in seine stromaufwärtige Position gebracht wird.

3. Maschine nach Anspruch 2, bei der der Formgeber (5) an dem ersten Rahmen (11) montiert ist.

4. Maschine nach Anspruch 2, wobei das Halteorgan mindestens eine Andruckvorrichtung (17) umfasst, die an dem Gestell gelagert ist, um quer zum Führungsrohr (3) zwischen einer Position zum Drücken des zu einem Rohr geformten Bandes (100) gegen das Führungsrohr (3) und einer zu dem zu einem Rohr geformten Band (100) beabstandeten Position beweglich zu sein.

5. Maschine nach Anspruch 2, bei der das Heizorgan (7) an dem zweiten Rahmen (22) unmittelbar über der Form (8) montiert ist.

6. Maschine nach Anspruch 1, bei der das Führungsrohr (3) in Längsrichtung einen Hin- und Rückkanal (3.2, 3.3) enthält, der einen Einlass und einen Auslass hat, die mit einer Wärmeregulierungsvorrichtung (13) verbunden sind, die einen Wärmeträgerfluidkreislauf umfasst.

7. Maschine nach Anspruch 6, bei der das Wärmeträgerfluid ein Öl ist.

8. Maschine nach Anspruch 6, bei der das Wärmeträgerfluid Luft ist.

9. Maschine nach Anspruch 6, bei der ein an die Wärmeregulierungsvorrichtung (13) angeschlossener Temperaturmessfühler (14) fest mit dem Führungsrohr (3) verbunden ist.

10. Maschine nach Anspruch 1, bei der das Führungsrohr (3) an das Luftverteilungsorgan (4) angeschlossen ist, um das Blasformorgan zu bilden.

11. Maschine nach den Ansprüchen 6 und 10, bei der das Führungsrohr (3) eine zentrale Leitung (3.1) umfasst, die an das Luftverteilungsorgan (4) angeschlossen ist, und der Hin- und Rückkanal zwei ringförmige Leitungen (3.2, 3.3) umfasst, die koaxial zur zentralen Leitung (3.1) sind.

12. Maschine nach Anspruch 10, umfassend ein Dichtungselement zwischen dem zu einem Rohr geformten Band (100) und dem Führungsrohr (3) am Einlass der Form (8).

13. Maschine nach Anspruch 12, bei der das Dichtungselement eine Membran (24) ist.

14. Maschine nach Anspruch 10, umfassend Kompensationsmittel zur Kompensation eines Volumens, das in dem zu einem Rohr geformten Band (100) während einer Bewegung des Führungsrohrs (3) in Bezug auf das zu einem Rohr geformte Band (100) frei gelassen wird.

15. Maschine nach Anspruch 14, bei der die Kompensationsmittel einen Zylinder (25) umfassen, der ein Ende hat, das mit dem Gestell (1) verbunden ist, ein Ende, das mit dem ersten Rahmen (11) verbunden ist, und eine Kammer, die mit dem Luftverteilungsorgan derart verbunden ist, dass die relative Bewegung des Führungsrohrs (3) und des Halteorgans (17) die Injektion eines Luftvolumens in das Rohr bewirkt, wobei das Luftvolumen im Wesentlichen gleich dem Volumen ist, das in dem zu einem Rohr geformten Band (100) während der Bewegung des Führungsrohrs (3) frei gelassen wird.

16. Maschine nach Anspruch 1, bei der das Blasformorgan eine Hohlnadel (26) umfasst, die ein Ende hat, das an das Luftverteilungsorgan (4) angeschlossen ist, sowie ein spitzes Ende, das in einen Teil der Form (8) vorsteht, um das Rohr beim Schließen der Form (8) zu durchstechen.

## Claims

1. A machine for blow-molding articles from a strip (100) of material, the machine comprising a mount (1) having mounted thereon in succession along a rectilinear path of the strip (100) through the machine: a guide pipe (3) coaxial about a longitudinal direction of the strip (100); a shaper (5) arranged around the guide pipe (3) to bring the longitudinal edges of the strip (100) close to each other in order to shape the strip (100) into a tube around the guide pipe; a welder member (6) for welding together adjacent edges of the strip (100) shaped as a tube; at least one heater member (7) for heating the strip; a mold (8) having two portions movable relative to each other; the machine including a device for driving the strip (100) along its longitudinal direction and a blower member (26) connected to an air manifold member (4) for deforming the tube inside the mold (8) and for pressing the tube against a cavity of the mold; the blower member, the welder member, the heater member, the mold, and the drive device being connected to a control unit (30) for controlling them; the machine being **characterized in that** the drive device comprises at least one member (17) for longitudinally holding the strip (100) and two frames (11, 22) mounted on the mount (1) and each connected to a movement actuator (12, 23) so as to be movable along the path of the strip (100), each being movable between an upstream position and a downstream position relative to a movement direction of the strip (100) through the machine, and **in that** the pipe (3), the holder member (17) and the mold (8) are respectively mounted on one item selected from the mount (1) and the frames (11, 22) and the control unit is connected to the movement actuators (12, 23) to control them in such a manner as to generate a sequence of moving the guide pipe (3) and the mold (8) relative to the holder member (17) and of opening and closing the mold (8) in such a manner as to cause the strip (100) to advance along the rectilinear path.

2. A machine according to claim 1, wherein the guide pipe (3) is secured to the first frame (11), the holder member (17) is secured to the mount (1) and the mold (8) is secured to the second frame (22), the control unit being arranged in such a manner that:
• the first frame (11) and the second frame (22) are taken simultaneously from their upstream positions towards their downstream positions after closure of the mold (8);
• the first frame (11) is returned towards its upstream position before the mold (8) is opened;
• the second frame (22) is returned towards its upstream position after the mold (8) is opened.

3. A machine according to claim 2, wherein the shaper member (5) is mounted on the first frame (11).

4. A machine according to claim 2, wherein the holder member includes at least one presser (17) mounted on the mount to be movable transversely relative to the guide pipe (3) between an application position for applying the strip (100) shaped as a tube against the guide pipe (3), and a release position spaced apart from the strip (100) shaped as a tube.

5. A machine according to claim 2, wherein the heater member (7) is mounted on the second mount (22) immediately above the mold (8).

6. A machine according to claim 1, wherein the guide pipe (3) incorporates longitudinally a go-and-return channel (3.2, 3.3) having an inlet and an outlet connected to a temperature regulator device (13) including a heat transfer fluid circuit.

7. A machine according to claim 6, wherein the heat transfer fluid is an oil.

8. A machine according to claim 6, wherein the heat transfer fluid is air.

9. A machine according to claim 6, wherein a temperature probe (14), connected to the temperature regulator device (13), is secured to the guide pipe (3).

10. A machine according to claim 1, wherein the guide pipe (3) is connected to the air manifold member (4) in order to form the blower member.

11. A machine according to claims 6 and 10, wherein the guide pipe (3) includes a central duct (3.1) connected to the blower member (4) and the go-and-return channel comprises two annular ducts (3.2, 3.3) that are coaxial about the central duct (3.1).

12. A machine according to claim 10, including a sealing element between the strip (100) shaped as a tube and the guide pipe (3) at the inlet of the mold (8).

13. A machine according to claim 12, wherein the sealing element is a diaphragm (24).

14. A machine according to claim 10, including compensation means for compensating a volume left empty in the strip (100) shaped as a tube during movement of the guide pipe (3) relative to the strip (100) shaped as a tube.

15. A machine according to claim 14, wherein the compensation means comprise an actuator (25) having one end connected to the mount (1), one end connected to the first frame (11) and a chamber connected to the air manifold member in such a manner that the relative movement between the guide pipe (3) and the holder member (17) causes a volume of air to be injected into the tube that is substantially equal to the volume left empty in the strip (100) shaped as a tube during the movement of the guide pipe (3).

16. A machine according to claim 1, wherein the blower member comprises a hollow needle (26) having one end connected to the air manifold member (4) and a pointed end projecting into a mold portion (8) in order to pierce the tube on closing the mold (8).
